# EUROPÄISCHE PATENTSCHRIFT

(11) **EP 0 614 792 B1**
(45) Veröffentlichungstag und Bekanntmachung des Hinweises auf die Patenterteilung: **27.11.1996**
(21) Anmeldenummer: 94103157.7
(22) Anmeldetag: 03.03.1994
(51) Int. Cl.: B61F 1/00, B61D 17/02

(54) **Aussenlangträger für 2achsige Eisenbahngüterwagen**
Exterior longitudinal beam for twin axle railway wagon
Longeron latéral extérieur pour wagon ferroviaire à deux essieux

(30) Priorität: 12.03.1993 DE 4307887
(43) Veröffentlichungstag der Anmeldung: 14.09.1994
(73) Patentinhaber: ABB HENSCHEL WAGGON UNION GmbH, D-13509 Berlin (DE)
(72) Erfinder: Köhler, Günter, Dr., D-57074 Siegen (DE); Bieker, Guido, D-57399 Kirchhundem (DE); Keil, Klaus, D-57555 Mudersbach (DE)
(74) Vertreter: Rupprecht, Klaus, Dipl.-Ing.

(56) Entgegenhaltungen:
- DE-C- 859 633
- FR-A- 2 062 180
- US-A- 3 333 552
- US-A- 4 599 949

## Beschreibung

Die Erfindung betrifft Außenlangträger für 2achsige Eisenbahngüterwagen, die zur Überleitung der horizontalen Pufferkräfte und zur Aufnahme der vertikalen Last des Ladegutes ausgebildet sind und die Vorrichtungen zur Lagerung der Achsen tragen.

Außenlangträger für 2achsige Eisenbahngütervagen bestehen üblicherweise aus einem durchgehenden, gewalzten oder gekanteten oder zusammengeschweißten Profil, bei dem zwischen den Achsen nach unten ragende, fischbauchartige Versteifungen in Form von Fachwerkträgern oder Blechprofilen angeordnet sind. Zur Aufnahme der Achsen sind an den bekannten Außenlangträgern aus Blech bestehende Achshalter angeschweißt und mit Achshalterbügeln, die die Achshalter innen umgreifen und unter den Außenlangträgern angeschweißt sind, gesichert. Die Ausbildung dieser bekannten Außenlangträger erfolgt aus einer Vielzahl von separaten Bauteilen, die in aufwendiger Weise zusammengeschweißt werden müssen. Nachteilig bei diesen bekannten Außenlangträgern ist weiter das erforderliche maßgenaue Einsetzen von Querträgern, die von innen stumpf gegen die Außenlangträger angeschweißt werden müssen.

Die Aufgabe vorliegender Erfindung bestand darin, einen Außenlangträger für 2achsige Eisenbahngüterwagen zu finden, der aus einfachen, wirtschaftlich herstellbaren Bauteilen besteht, der eine einfache und wirtschaftliche Anordnung von erforderlichen Querträgern ermöglicht, der die Schallemmission der Laufwerke reduziert und die aerodynamischen Eigenschaften im Untergestellbereich verbessert.

Diese Aufgabe wird gemäß der Erfindung dadurch gelöst, daß der Außenlangträger durchgehend von Kopfstück zu Kopfstück des Eisenbahngüterwagens lediglich aus mehrfach gekantetem Blech mit gleicher Wandstärke besteht. Hierbei ist der Außenlangträger im Querschnitt stoßfrei ausgebildet. Durch diese erfindungsgemäße Ausbildung des Außenlangträgers wird ein einfaches, wirtschaftlich herzustellendes Bauteil geschaffen, das vorteilhaft aus einem einzigen Bauelement bestehen kann.

Gemäß einer Ausführungsform der Erfindung ist der Außenlangträger an seiner oberen Längsseite dreistufig ausgebildet, wobei die oberste Stufe die Ladeebene, die mittlere Stufe die Auflage des Bodenbelags und die untere Stufe die Auflage für Querträger des Eisenbahngüterwagens bilden. Durch diese abgestufte Ausbildung des Außenlangträgers in dessen oberen Bereich ist ein einfaches, bezüglich der Maßgenauigkeit freizügiges Einlegen des Bodenbelags und der Querträger des Eisenbahngüterwagens und deren Befestigung mit einfachen Mitteln und wirtschaftlich möglich.

Der Außenlangträger ist gemäß einer weiteren Ausführungsform der Erfindung über die Achsen zum Kopfstück in gleicher Bauhöhe durchlaufend ausgeführt. Durch die, die Achspartien des Eisenbahngüterwagens überdeckenden sogenannten Schürzen des Langträgers wird die Schallemmission der Laufwerke deutlich reduziert. Die aerodynamischen Eigenschaften insbesondere der Luftwiderstand und die Windgeräusche werden herabgesetzt.

Im Bereich der Achsen sind in den Außenlangträgern unten offene Ausschnitte zur Aufnahme der Achslagergehäuse der Achsen vorgesehen, wobei die Ausschnitte wie bekannt unten durch einen Achshalterschlüssel verschließbar sind und wobei an den vertikalen Kanten des Ausschnitts Gleitführungen zum Längsanschlag der Achslagergehäuse angeordnet sind.

Der Außenlangträger wird durch diese Ausbildung außer seinen der Überleitung der horizontalen und der Aufnahme der vertikalen Kräfte dienenden Aufgaben gleichzeitig zur Aufnahme der Achslagergehäuse mit herangezogen. Diese Ausführung gewährleistet vorteilhaft eine Verminderung der erforderlichen Bauteile und damit eine wirtschaftliche Ausführung.

Gemäß einer Weitergestaltung der Erfindung sind weiter beidseitig des Ausschnitts auf der Innenseite der Außenlangträger vertikal Federblätter angeordnet, die oben am Außenlangträger kraftschlüssig eingespannt und im Bereich der Achslagergehäuse vor dem Außenlangträger mit definiertem Abstand versehen angeordnet sind. Durch die Anordnung dieser Federblätter kann die Quersteifigkeit der Achsführung auf vorteilhafte Weise definiert ausgebildet werden.

Einzelheiten der Erfindung sind an Hand eines Ausführungsbeispiels in der Zeichnung erläutert.

Es zeigen
- Fig 1: Die Seitenansicht eines 2achsigen Eisenbahngüterwagens mit einem Außenlangträger gemäß der Erfindung

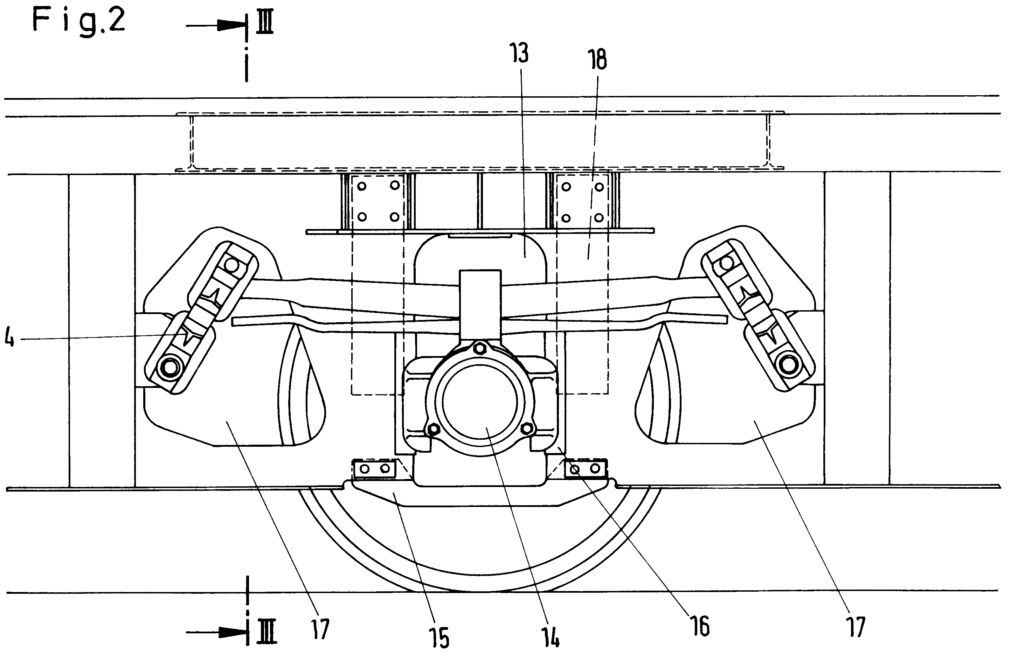

- Fig 2: Einen vergrößerten Ausschnitt des Eisenbahngüterwagens nach Fig 1

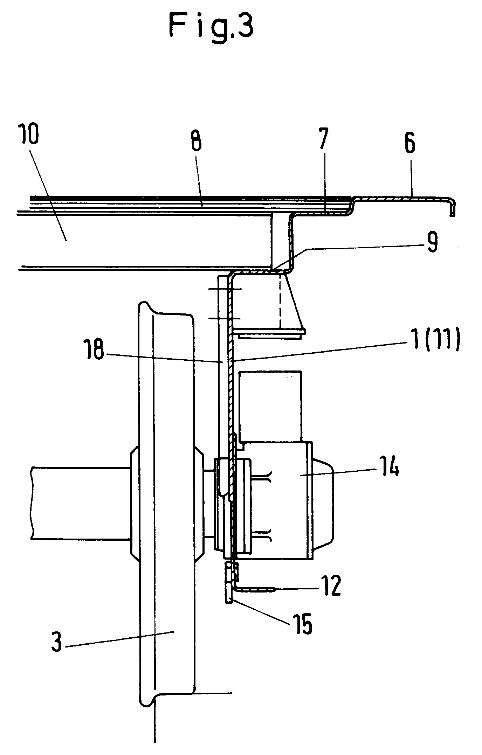

- Fig 3: Den Querschnitt nach Linie III-III der Fig 2

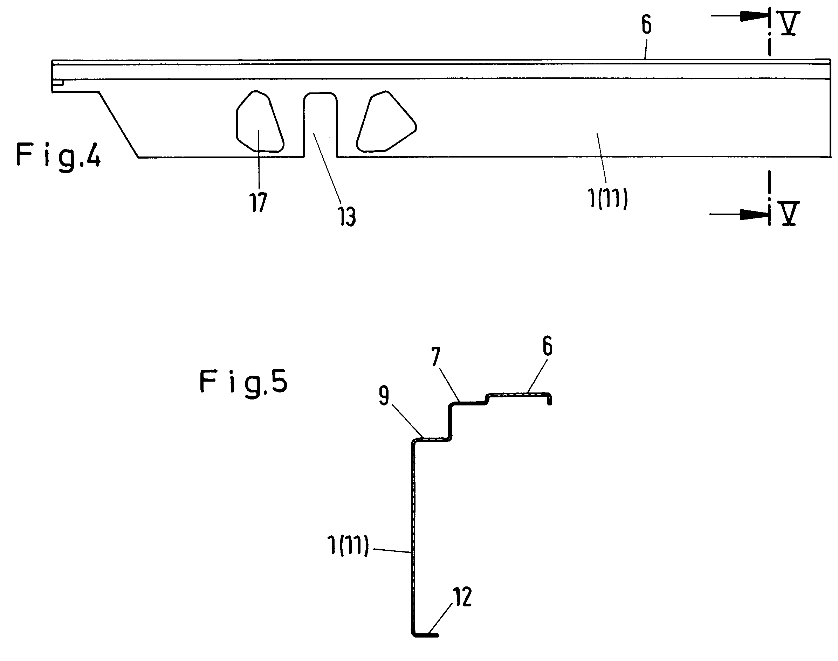

- Fig 4: Einen Teil der Seitenansicht des Außenlangträgers gemäß der Erfindung
- Fig 5: Einen Schnitt nach Linie V-V der Fig 4

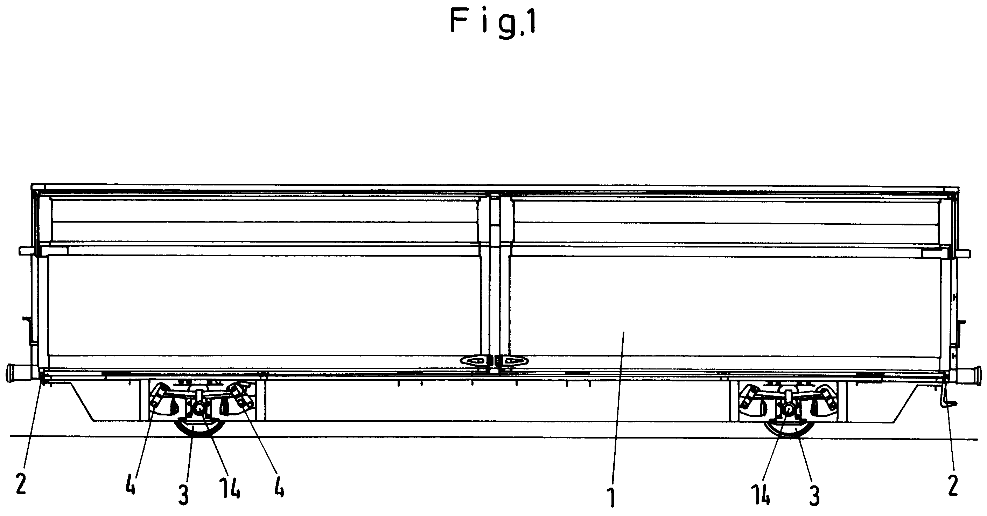

Der erfindungsgemäße Außenlangträger ist in der Zeichnung Fig 1 an einem 2achsigen Schiebewandwagen dargestellt. Der Außenlangträger (1) besteht dabei zwischen den Kopfstücken des Eisenbahngüterwagens aus einem einzigen, mehrfach gekanteten Blech mit gleichem Querschnitt, daß lediglich nahe den Kopfstücken (2) des Eisenbahngüterwagens im Bereich der Achsen (3) und im Bereich der Federschaken (4) mit Ausschnitten versehen ist.

Der Außenlangträger (1) weist dabei an seiner oberen Längsseite eine dreistufige Abkantung auf, wobei die oberste Stufe (6) in Ladeebene des Eisenbahngüterwagens liegt und diese seitlich einrahmt, die mittlere Stufe (7) die Auflage des Bodenbelags (8) bildet und die untere Stufe (9) zur Auflage der erforderlichen Querträger (10) des Untergestells des Eisenbahngüterwagens vorgesehen ist. Der vertikale Bereich (11) des Außenlangträgers (1) mit einer horizontalen Abkantung (12) an dessen unterer Längsseite verläuft mit gleichem Querschnitt über die Achsen (3) hinaus bis in die Nähe der Kopfstücke (2). Nahe der Kopfstücke (2) ist der Außenlangträger (1) von unten ausgeschnitten und verjüngt bis in die Höhe der Kopfstücke (2) verlaufend ausgebildet. Diese Verjüngung des Außenlangträgers (1) erfolgt durch Ausstanzen oder Ausschneiden des Langträgers (1). Im Bereich der Achsen (3) sind unten offene Ausschnitte (13) zur Aufnahme der Achslagergehäuse (14) der Achse (3) vorgesehen. Diese Ausschnitte (13) sind durch Achshalterschlüssel (15) verschließbar. An den vertikalen Kanten des Ausschnitts (13) sind Gleitführungen (16) zum Längsanschlag der Achslagergehäuse (14) befestigt. Öffnungen (17) in dem vertikalen Bereich (11) des Außenlangträgers (1) in Höhe der Schaken (4) dienen der Kontrolle der Bremsanlage. Auf der Innenseite der Außenlangträger (1) sind beidseitig des Ausschnitts (13) vertikal Federblätter (18) angeordnet.

Diese Federblätter (18) sind oben am Außenlangträger (1) kraftschlüssig eingespannt und liegen im Bereich der Achslagergehäuse (14) mit definiertem Abstand vor dem Außenlangträger (1) und dienen der Übertragung der Querkräfte zwischen Untergestell und Achslagergehäuse (14).

## Patentansprüche

1. Außenlangträger für 2achsigen Eisenbahngüterwagen, die zur Überleitung der horizontalen Pufferkräfte und zur Aufnahme der vertikalen Last des Ladegutes ausgebildet sind und die Vorrichtungen zur Lagerung der Achsen tragen, dadurch gekennzeichnet, daß der Außenlangträger (1) durchgehend zwischen den Kopfstücken (2) des Eisenbahngüterwagens lediglich aus mehrfach gekantetem Blech mit gleicher Wandstärke besteht.

2. Außenlangträger nach Anspruch 1, dadurch gekennzeichnet, daß der Außenlangträger (1) im Querschnitt stoßfrei ausgebildet ist.

3. Außenlangträger nach den Ansprüchen 1 und 2, dadurch gekennzeichnet, daß der Außenlangträger (1) an seiner oberen Längsseite dreistufig ausgebildet ist, wobei die oberste Stufe (6) die Ladeebene, die mittlere Stufe (7) die Auflage des Bodenbelags (8) und die untere Stufe (9) die Auflage für Querträger (10) des Eisenbahngüterwagens bildet.

4. Außenlangträger nach den Ansprüchen 1 bis 3, dadurch gekennzeichnet, daß der Außenlangträger (1) über die Achsen (3) zum Kopfstück (2) hin in gleicher Bauhöhe ausgeführt ist.

5. Außenlangträger nach den Ansprüchen 1 bis 4, dadurch gekennzeichnet, daß im Bereich der Achsen (3) in den Außenlangträger (1) unten offene Ausschnitte (13) zur Aufnahme der Achslagergehäuse (14) der Achsen (3) vorgesehen sind, wobei die Ausschnitte (13) wie bekannt unten durch einen Achshalterschlüssel verschließbar und wobei an den vertikalen Kanten des Ausschnitts Gleitführungen zum Längsanschlag der Achslagergehäuse angeordnet sind.

6. Außenlangträger nach den Ansprüchen 1 bis 5, dadurch gekennzeichnet, daß beidseitig des Ausschnitts (13) auf der Innenseite der Außenlangträger (1) vertikal Federblätter (18) angeordnet sind, die oben am Außenlangträger (1) kraftschlüssig eingespannt und im Bereich der Achslagergehäuse (14) vor dem Außenlangträger (1) mit definiertem Abstand versehen, angeordnet sind.

## Claims

1. Side sills for 2-axle railway goods wagons, which are designed to transmit the horizontal buffer forces and to accept the vertical load of the cargo and which support devices for the mounting of the axles, characterized in that the side sill (1) consists of a single metal sheet of uniform wall thickness bent a number of times and extending continuously between the buffer beams (2) of the railway goods wagon.

2. Side sill according to Claim 1, characterized in that the side sill (1) is of joint-free construction in cross-section.

3. Side sill according to Claims 1 and 2, characterized in that, at its upper longitudinal end, the side sill (1) is designed with three steps, the topmost step (6) forming the loading plane, the central step (7) forming the support for the floor covering (8) and the bottom step (9) forming the support for cross members (10) of the railway goods wagon.

4. Side sill according to Claims 1 to 3, characterized in that the side sill (1) is designed with the same overall height over the axles (3) towards the buffer beam (2).

5. Side sill according to Claims 1 to 4, characterized in that downwardly open cut-outs (13) are provided in the side sill (1) in the region of the axles (3) to accommodate the axle-box cases (14) of the axles (3), the cut-outs (13) being closable at the bottom in a known manner by means of an axle-guide web, and slideways being arranged on the vertical edges of the cut-out to provide longitudinal stops for the axle-box cases.

6. Side sill according to Claims 1 to 5, characterized in that leaf springs (18) are arranged vertically on both sides of the cut-out (13), on the inside of the side sills (1), these leaf springs being clamped in non-positively at the top on the side sill (1) and being provided at a defined spacing in front of the side sill (1), in the region of the axle-box cases (14).

## Revendications

1. Longeron latéral extérieur pour wagon à marchandises à deux essieux, agencé pour transmettre les forces longitudinales des tampons et supporter la charge verticale du chargement et portant les dispositifs de montage des essieux, caractérisé par le fait que le longeron latéral (1) extérieur qui s'étend d'une seule pièce entre les traverses de tête (2) du wagon à marchandises est formé uniquement d'une tôle d'épaisseur constante pliée plusieurs fois.

2. Longeron latéral extérieur selon la revendication 1, caractérisé par le fait que le longeron latéral (1) présente une section sans joint.

3. Longeron latéral extérieur selon les revendications 1 et 2, caractérisé par le fait que le longeron (1), dans la partie supérieure de son côté longitudinal, est étagé avec trois gradins, le gradins supérieur (6) formant le plan de chargement, le gradin intermédiaire (7) formant l'appui pour le plancher (8) et le gradin inférieur (9) formant l'appui pour les traverses (10) du wagon à marchandises.

4. Longeron latéral extérieur selon les revendications 1 à 3, caractérisé par le fait que le longeron (1) a une hauteur constante au-delà des essieux (3) jusqu'à la traverse de tête (2).

5. Longeron latéral extérieur selon les revendications 1 à 4, caractérisé par le fait que des découpes (13) ouvertes dans le bas sont prévues dans le longeron latéral (1) extérieur, dans la région des essieux (3), les découpes (13) étant fermées de manière connue par une bride de retenue et des glissières étant disposées sur les bords verticaux de la découpe en tant que butées longitudinales des boîtes d'essieu.

6. Longeron latéral extérieur selon les revendications 1 à 5, caractérisé par le fait que des lames de ressort (18) sont disposées verticalement sur le côté intérieur des longerons (1), de part et d'autre de la découpe (13), lesquelles lames de ressort sont fixées par serrage et sont disposées à une distance déterminée du longeron latéral (1) extérieur dans la région des boîtes d'essieu (14).
